(19) Europäisches Patentamt
European Patent Office
Office européen des brevets

(11) Publication number: **0 181 405**
**B1**

(12) # EUROPEAN PATENT SPECIFICATION

(45) Date of publication of patent specification: **05.12.90**

(51) Int. Cl.$^5$: **C 04 B 35/46,** H 01 B 3/12

(21) Application number: **85902128.9**

(22) Date of filing: **18.04.85**

(86) International application number:
**PCT/JP85/00212**

(87) International publication number:
**WO 85/05101 21.11.85 Gazette 85/25**

(54) **DIELECTRIC CERAMIC MATERIAL.**

(30) Priority: **28.04.84 JP 87634/84**

(43) Date of publication of application:
**21.05.86 Bulletin 86/21**

(45) Publication of the grant of the patent:
**05.12.90 Bulletin 90/49**

(84) Designated Contracting States:
**DE FR GB NL**

(56) References cited:
**JP-A-5 795 872**
**JP-B-3 517 729**

**CHEMICAL ABSTRACTS, vol. 100, no. 6, February 1984, page 252, abstract 38648p, Columbus, Ohio, US; & JP-A-58 139 322 (MATSUSHITA ELECTRIC INDUSTRIAL CO., LTD) 18-08-1983**

(73) Proprietor: **SONY CORPORATION**
**7-35 Kitashinagawa 6-Chome Shinagawa-ku**
**Tokyo 141 (JP)**

(72) Inventor: **SUZUKI, Hiroyuki Sony Magnetic Product, Inc.**
**5-6, Kitashinagawa 6-chome**
**Shinagawa-ku Tokyo 141 (JP)**
Inventor: **HARAYA, Kazunori Sony Magnetic Product, Inc.**
**5-6, Kitashinagawa 6-chome**
**Shinagawa-ku Tokyo 141 (JP)**
Inventor: **KITAMURA, Tomosaburo Sony Magnetic Product, Inc.**
**5-6, Kitashinagawa 6-chome**
**Shinagawa-ku Tokyo 141 (JP)**

(74) Representative: **TER MEER - MÜLLER - STEINMEISTER & PARTNER**
**Mauerkircherstrasse 45**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 181 405 B1

## Description

Technical field

The present invention relates to a dielectric ceramic material and more particularly to a dielectric ceramic material of $CaO\text{-}TiO_2$ type exhibiting optimum characteristics as a guard member, a substrate member and so on for a magnetic transducer head used in, for example, a video tape recorder, a floppy disk and so on.

Background art

Generally, in a magnetic transducer head used in a video tape recorder, a micro-floppy disk drive and so on, a non-magnetic guard member is disposed to grip a magnetic gap so as to form a part of its contact surface for a magnetic recording medium. The prior art guard member having CaO and $TiO_2$ as its main composition uses oxides of Al, Si, Ca, Mg, Sn, Zr, Ba, Sr and so on as an additive in order to reduce the pores thereof. However, the firing temperature of the guard member is high in general and the pores can not be reduced so much. Therefore, there may occur such phenomenon that magnetic powders adhere to the pore or that chipping of the guard member causes change on the magnetic transducer head of magnetic recording medium such as a magnetic sheet. Further, in order to reduce the pores, HIP (hot isostatic press) treatment and hot press treatment, etc. have to be carried out, increasing the manufacturing cost of the dielectric ceramic material. In addition, a difference between thermal expansion coefficients of the guard member and a magnetic core member causes the guard member to be cracked or peeled off upon bonding.

In view of the above mentioned aspects, the present invention is to provide a dielectric ceramic material which can be made high in density by the normal firing without special treatment and which can present a desired thermal expansion coefficient.

Disclosure of invention

The present invention relates to a dielectric ceramic material which is made by such a manner that in a fundamental composition expressed by

$$\{(Ca_{1-3/2y}Bi_y)O\}_{100-x}(TiO_2)_x$$

where x is selected in a range from 40 to 85 mol %, y is selected in a range from 0.005 to 0.6 molar ratio and/or 0.5 to 7.0 parts by weight of ZnO are added to 100 parts by weight of the above mentioned fundamental composition and then the mixture is fired.

That is, in this case, the dielectric ceramic material is made such that to the main composition of CaO and $TiO_2$, part of its Ca substituted with Bi, ZnO is added thereto or both of them are added thereto.

According to this invention, a dielectric ceramic material which is less in pore and high in density can be obtained by the normal firing method. Also, the thermal expansion coefficient thereof can be varied by the substituted amount of Bi.

Best mode for carrying out the invention

Examples of this invention will be described hereinafter.

In the present examples, $TiO_2$, $CaCO_3$, $Bi_2O_3$ and ZnO, which will become components, were mixed in a ball mill by the wet mixing method. After the mixture being dried, the product was pulverized and calcined at a temperature between 750°C and 900°C. Thereafter, the powders pulverized were molded under a pressure ranging from 1.0 to 2.0 t/cm$^2$ and then fired, thus a dielectric ceramic material being formed. The firing was carried out in the oxygen atmosphere at a temperature between 1200°C and 1350°C. Various characteristics of the resultant samples (dielectric ceramic materials) are indicated on respective tables.

On each table, the thermal expansion coefficient was measured at a temperature between 50°C and 400°C. The pore rank was determined as follows. Rank 3 indicates that the diameter of pore lies in a range from about 5 to 10 µm; rank 4 indicates that the diameter of pore lies in a range from about 3 to 5 µm; and rank 5 indicates that the diameter of pore is equal to or smaller than 3 µm.

The above mentioned firing temperature is only an example and can be varied within a range of about 100°C relative to such iring temperature.

Example 1

1.0 part by weighnof ZnO was added to 100 parts by weight of a mixture of 55 mol % of $TiO_2$ and 45 mol % of $(Ca_{1-3/2y}Bi_y)O$ and a substituting amount y of Bi was varied from 0 to 0.6, thus to make samples 1 to 12, sample 1 being a comparison sample. Various characteristics, such as density (g/cm$^3$), pore rank and thermal expansion coefficient ($\times 10^{-7}$ 1/°C) of the respective samples are indicated on a Table 1.

From the Table 1, it will be noted that as the substituting amount of Bi was increased, the firing temperature was lowered and the thermal expansion coefficient was varied from $120\times 10^{-7}$ 1/°C to $80\times 10^{-7}$ 1/°C.

Example 2

The adding amount of ZnO to 100 parts by weight of a mixture of 55 mol % of $TiO_2$ and 45 mol % of $(Ca_{0.97}Bi_{0.02})O$ was varied from 0 to 7 parts by weight, thus respective samples 13 to 18 being made. Sample 13 is used as a comparative example. The various characteristics of the respective samples are indicated on a Table 2.

From Table 2, it will be clear that even when the adding amount of ZnO was varied, the thermal expansion coefficient was not varied substantially. It should be noted that when the adding amount of ZnO exceeded 7 parts by weight, the bending strength and so on were lowered.

Example 3

1.0 part by weight of ZnO was added to 100 parts by weight of a mixture of x mol % of $TiO_2$ and (100-x) mol % of $(Ca_{0.925}Bi_{0.05})O$ and the x mol % of $TiO_2$ was varied from 55 to 85, thus respective samples 19 to 23 being made. The various characteristics of the respective samples are indicated on a Table 3.

From the Table 3, it will be apparent that as the x mol % of $TiO_2$ was increased, the thermal expansion coefficient α was lowered and that the pore rank was not changed at all.

Example 4

3.0 parts by weight of ZnO was added to 100 parts by weight of a mixture of x mol % of $TiO_2$ and (100-x) mol % of $(Ca_{0.97}Bi_{0.02})O$ and the mol % of $TiO_2$ was varied from 40 to 70, thus respective samples 24 to 27 being made. The various characteristics of the respective samples are indicated on a Table 4.

Example 5

1.0 part by weight of ZnO was added to 100 parts by weight of a mixture of x mol % of $TiO_2$ and (100-x) mol % of $(Ca_{0.7}Bi_{0.2})$ and x mol % of $TiO_2$ was varied in a range from 50 to 75, thus respective samples 28 to 31 being made. The various characteristics of the respective samples are indicated on a Table 5.

From the Tables 4 and 5, it should be noted that the Examples 4 and 5 both had the same tendency as the Example 3.

Example 6

1.0 part by weight of ZnO was added to 100 parts by weight of a mixture of 70 mol % of $TiO_2$ and 30 mol % of $(Ca_{1-3/2y}Bi_y)O$ and the substituting amount y of Bi was varied from 0.05 to 0.3, thus respective samples 32 to 35 being made. The various characteristics of these samples are indicated on a Table 6.

Example 7

1.0 part by weight of ZnO was added to 100 parts by weight of a mixture of 80 mol % of $TiO_2$ and 20 mol % of $(Ca_{1-3/2y}Bi_y)O$ and the substituting amount y of Bi was varied from 0 to 0.05, thus respective samples 36 to 38 being made, sample 36 being a comparative sample. The various characteristics of the respective samples are indicated on a Table 7.

TABLE 1

| Sample | mol % of $TiO_2$ | Substituting amount y of $Bi_2O_3$ | Adding amount (parts by weight) of ZnO | Firing temperature C° | Density (g/cm³) | Pore rank | Thermal expansion coefficient $\alpha(\times 10^{-7}\ ^1/°C)$ |
|---|---|---|---|---|---|---|---|
| No. 1 | 55 | 0 | 1.0 | 1350 | 4.01 | 3 | 120 |
| No. 2 | 55 | 0.005 | 1.0 | 1350 | 4.04 | 5 | 117 |
| No. 3 | 55 | 0.01 | 1.0 | 1350 | 4.06 | 5 | 114 |
| No. 4 | 55 | 0.02 | 1.0 | 1350 | 4.12 | 5 | 111 |
| No. 5 | 55 | 0.03 | 1.0 | 1350 | 4.14 | 5 | 112 |
| No. 6 | 55 | 0.05 | 1.0 | 1350 | 4.21 | 5 | 111 |
| No. 7 | 55 | 0.07 | 1.0 | 1300 | 4.29 | 5 | 113 |
| No. 8 | 55 | 0.1 | 1.0 | 1300 | 4.40 | 5 | 109 |
| No. 9 | 55 | 0.2 | 1.0 | 1250 | 4.76 | 5 | 107 |
| No. 10 | 55 | 0.3 | 1.0 | 1250 | 5.08 | 5 | 98 |
| No. 11 | 55 | 0.4 | 1.0 | 1250 | 5.44 | 4 | 90 |
| No. 12 | 55 | 0.6 | 1.0 | 1250 | 6.18 | 4 | 80 |

TABLE 2

| Sample | mol % of $TiO_2$ | Substituting amount y of $Bi_2O_3$ | Adding amount (parts by weight) of ZnO | Firing tempera-ture C° | Density ($g/cm^3$) | Pore rank | Thermal expansion coefficient $\alpha(\times 10^{-7}\ ^1/^\circ C)$ |
|---|---|---|---|---|---|---|---|
| No. 13 | 55 | 0.02 | 0 | 1350 | 3.82 | 3 | 111 |
| No. 14 | 55 | 0.02 | 0.5 | 1350 | 4.09 | 5 | 113 |
| No. 15 | 55 | 0.02 | 1.0 | 1350 | 4.12 | 5 | 111 |
| No. 16 | 55 | 0.02 | 3.0 | 1350 | 4.12 | 5 | 111 |
| No. 17 | 55 | 0.02 | 5.0 | 1300 | 4.12 | 5 | 113 |
| No. 18 | 55 | 0.02 | 7.0 | 1300 | 4.16 | 5 | 111 |

TABLE 3

| Sample | mol % of $TiO_2$ | Substituting amount y of $Bi_2O_3$ | Adding amount (parts by weight) of ZnO | Firing tempera-ture C° | Density ($g/cm^3$) | Pore rank | Thermal expansion coefficient $\alpha(\times 10^{-7}\ ^1/^\circ C)$ |
|---|---|---|---|---|---|---|---|
| No. 19 | 55 | 0.05 | 1.0 | 1350 | 4.21 | 5 | 111 |
| No. 20 | 70 | 0.05 | 1.0 | 1300 | 4.27 | 5 | 100 |
| No. 21 | 75 | 0.05 | 1.0 | 1300 | 4.26 | 5 | 98 |
| No. 22 | 80 | 0.05 | 1.0 | 1300 | 4.27 | 5 | 96 |
| No. 23 | 85 | 0.05 | 1.0 | 1300 | 4.27 | 5 | 94 |

TABLE 4

| Sample | mol % of $TiO_2$ | Substituting amount y of $Bi_2O_3$ | Adding amount (parts by weight) of ZnO | Firing tempera-ture C° | Density ($g/cm^3$) | Pore rank | Theraml expansion coefficient $\alpha(\times 10^{-7}\ ^1/^\circ C)$ |
|---|---|---|---|---|---|---|---|
| No. 24 | 40 | 0.02 | 3.0 | 1350 | 3.89 | 3 | 111 |
| No. 25 | 50 | 0.02 | 3.0 | 1350 | 4.08 | 3 | 112 |
| No. 26 | 60 | 0.02 | 3.0 | 1350 | 4.13 | 5 | 109 |
| No. 27 | 70 | 0.02 | 3.0 | 1350 | 4.16 | 5 | 103 |

TABLE 5

| Sample | mol % of $TiO_2$ | Substituting amount y of $Bi_2O_3$ | Adding amount (parts by weight) of ZnO | Firing tempera-ture C° | Density ($g/cm^3$) | Pore rank | Thermal expansion coefficient $\alpha(\times 10^{-7}\ ^1/^\circ C)$ |
|---|---|---|---|---|---|---|---|
| No. 28 | 50 | 0.2 | 1.0 | 1300 | 4.83 | 3 | 111 |
| No. 29 | 55 | 0.2 | 1.0 | 1250 | 4.76 | 5 | 107 |
| No. 30 | 70 | 0.2 | 1.0 | 1250 | 4.62 | 5 | 100 |
| No. 31 | 75 | 0.2 | 1.0 | 1250 | 4.55 | 5 | 97 |

TABLE 6

| Sample | mol % of $TiO_2$ | Substituting amount y of $Bi_2O_3$ | Adding amount (parts by weight) of ZnO | Firing tempera-ture C° | Density ($g/cm^3$) | Pore rank | Thermal expansion coefficient $\alpha(\times 10^{-7}\ ^1/^\circ C)$ |
|---|---|---|---|---|---|---|---|
| No. 32 | 70 | 0.05 | 1.0 | 1300 | 4.27 | 5 | 100 |
| No. 33 | 70 | 0.1 | 1.0 | 1250 | 4.39 | 5 | 102 |
| No. 34 | 70 | 0.2 | 1.0 | 1250 | 4.62 | 5 | 100 |
| No. 35 | 70 | 0.3 | 1.0 | 1250 | 4.83 | 5 | 91 |

TABLE 7

| Sample | mol % of $TiO_2$ | Substituting amount y of $Bi_2O_3$ | Adding amount (parts by weight) of ZnO | Firing temperature C° | Density ($g/cm^3$) | Pore rank | Thermal expansion coefficient $\alpha(\times 10^{-7}\ 1/°C)$ |
|---|---|---|---|---|---|---|---|
| No. 36 | 80 | 0 | 1.0 | 1350 | 4.19 | 4 | 96 |
| No. 37 | 80 | 0.02 | 1.0 | 1350 | 4.22 | 5 | 95 |
| No. 38 | 80 | 0.05 | 1.0 | 1300 | 4.27 | 5 | 96 |

As mentioned above, the dielectric ceramic material of $CaO$-$TiO_2$ type according to the present invention can be made high in density by the normal firing method and at the same time, the thermal expansion coefficient α thereof can be varied from 80 to $117\times10^{-7}$ 1/°C by selecting the substituting amount of Bi.

The prior art ceramic material made by the normal firing method requires a high temperature ranging from 900 to 1200°C for calcining and a high temperature ranging from 1260 to 1400°C for firing. However, according to the present invention, there was obtained such a result that the calcining can be carried out at a temperature ranging from 750 to 900°C, the firing can be carried out at a temperature ranging from 1200 to 1350°C, respectively, and the temporary press treatment upon the calcining is not required.

According to the present invention, by the fact that oxides of Bi and Zn are added to the main composition of $TiO_2$ and CaO, it is possible to obtain a dielectric ceramic material which is less in pore and high in density by the normal firing method without using the prior art special treatments, such as the HIP and so on. In respect of the thermal expansion coefficient α, although the thermal expansion coefficient α is fundamentally varied by the ratio of Ca:Ti in this invention too, since the thermal expansion coefficient α is varied by particularly the substituting amount y of Bi and the ratio of Ca:Ti, it is possible to vary the thermal expansion coefficient α in a wide range from 80 to $117\times10^{-7}$ 1/°C. In other words, it is possible to obtain some kinds of dielectric ceramic materials by selecting thermal expansion coefficient and hence it is possible to obtain desired material characteristics (Vickers hardness, firing temperature and bending strength) without adding some kinds of additives to the main composition. Further, since the dielectric ceramic material of this invention is produced by the normal firing method, it can be produced at low cost.

Industrial applicability

The dielectric material of this invention is particularly suitable for being applied to the guard member and the substrate material of the magnetic transducer head of, for example, the video tape recorder, the micro-floppy disk drive and so on.

**Claim**

A dielectric ceramic material obtained by firing a fundamental composition expressed as

$$\{(Ca_{1-3/2y}Bi_y)O\}_{100-x}(TiO_2)_x$$

wherein x is selected from 40 to 85 mol % and y is selected from 0.005 to 0.6 molar ratio, to which 0.5 to 7.0 parts by weight of ZnO per 100 parts by weight of said fundamental composition are added.

**Patentanspruch**

Dielektrisches Keramikmaterial, erhalten durch Brennen einer durch die Formel

$$\{(Ca_{1-3/2y}Bi_y)O\}_{100-x}(TiO_2)_x$$

ausgedrückten Grundzusammensetzung, worin x aus einem Bereich von 40 bis 85 Mol-% und y aus einem Molverhältnisbereich von 0,005 bis 0,6 ausgewählt sind, zu welchem 0,5 bis 7,0 Gew.-Teile ZnO pro 100 Gew.-Teile der Grundzusammensetzung hinzugefügt sind.

**Revendication**

Matériau céramique diélectrique obtenu par cuisson d'une composition exprimée par la formule:

$$[(Ca_{1-3/2y}Bi_y)O]_{100-x}(TiO_2)_x$$

x étant choisi entre 40 et 85 moles % et y étant un rapport molaire compris entre 0,005 et 0,6, et 0,5 à 7,0 parties en poids de ZnO sont ajoutées pour 100 parties en poids de la composition fondamentale.